# DEMANDE DE BREVET EUROPEEN

(11) **EP 1 431 888 A1**
(43) Date de publication de la demande: **23.06.2004**
(21) Numéro de dépôt: 03293183.4
(22) Date de dépôt: 16.12.2003
(51) Int. Cl.: G06F 17/30

(54) **Procédé et système d'indexation de pages WEB**

(30) Priorité: 19.12.2002 FR 0216186
(71) Demandeur: FRANCE TELECOM, 75015 Paris (FR)
(72) Inventeur: Legouix, Samuel, 14000 Caen (FR); Daridan, Olivier, rue Collet des Costils 14210 Cheux (FR); Goutard, Cédric, 14440 Douvres la Delivrance (FR)
(74) Mandataire: de Roquemaurel, Bruno

(57) **Abrégé**

Pour indexer des pages diffusées par l'intermédiaire d'un réseau (1) de transmission de données numériques, en vue de constituer une base de données d'indexation (6) utilisable par un moteur de recherche (7), les pages étant diffusées à des utilisateurs équipés chacun d'un terminal (11, 12, 13) connecté au réseau, ce procédé consiste à : recevoir (31) et mémoriser des requêtes d'accès à une page, émises par les utilisateurs à destination d'un serveur (4) connecté au réseau (1) ; retransmettre (32) les requêtes d'accès au réseau ; recevoir (33) les pages transmises par le réseau en réponse aux requêtes ; transmettre (34) chaque page reçue à un moteur d'indexation (24) qui l'analyse en vue de la répertorier dans la base de données d'indexation (6) ; et déterminer parmi les requêtes mémorisées la requête correspondant à chaque page reçue, et transmettre (38) chaque page reçue au terminal (11, 12, 13) ayant émis la requête correspondante.

## Description

La présente invention concerne un procédé et un système d'indexation de pages diffusées par l'intermédiaire d'un réseau public de transmission de données tel que le réseau Internet.

A l'heure actuelle, des centaines de millions de pages Web sont accessibles sur le réseau Internet, si bien qu'il est très difficile d'y trouver des informations pertinentes.

Pour résoudre ce problème, on a mis en place ce que l'on appelle des "moteurs de recherche" conçus pour fournir des listes de pages Web sur la base de mots clés ou de thèmes. A cet effet, chaque moteur de recherche dispose de ce que l'on appelle un "robot d'indexation" qui dispose d'une liste d'adresses de sites Internet référencés publiant des pages Web. Avec une telle liste, le robot d'indexation accède à chacun des sites référencés, analyse chaque page Web reçue de manière à en catégoriser le contenu, et suivre les liens hypertexte qui y figurent pour accéder aux autres pages Web publiées par le site. La catégorisation du contenu de chaque page Web par le robot d'indexation consiste à lui associer un thème et/ou des mots clés qui sont stockés dans une base de données d'indexation en relation avec l'adresse de la page.

Pour effectuer une recherche, un utilisateur du réseau Internet peut alors accéder au moteur de recherche qui l'invite à sélectionner un thème et/ou à introduire des mots clés, constituant une requête de recherche. Cette requête est traitée par le moteur de recherche en la soumettant à la base de données d'indexation, laquelle fournit en réponse une liste d'adresses de pages Web satisfaisant aux critères spécifiés dans la requête de recherche. Cette liste d'adresses est ensuite délivrée à l'utilisateur qui peut accéder à l'une ou l'autre des pages Web qui y sont mentionnées, en sélectionnant l'adresse correspondante.

Il s'avère que cette solution soulève plusieurs problèmes. En effet, elle permet d'effectuer des recherches uniquement parmi les sites Internet référencés. En parcourant tous les liens rencontrés dans les pages Web accédées, le robot d'indexation parcourt en fait un arbre de la racine jusqu'aux feuilles, si bien que les pages Web qui ne sont pas rattachées à d'autres pages par un lien hypertexte ne peuvent pas être analysées et répertoriées dans la base de données d'indexation. Ces pages font partie de ce que l'on appelle "l'Internet invisible".

En outre, pour accéder aux différents sites référencés, les robots d'indexation utilisent nécessairement une partie de la bande passante offerte par le réseau Internet sur la liaison entre le robot d'indexation et le site visité. Cette solution présente donc un coût en terme d'occupation du réseau. Ce coût est d'autant plus important que les moteurs d'indexation doivent fonctionner périodiquement avec une fréquence relativement élevée, pour éviter que les données d'indexation mémorisées dans la base deviennent obsolètes, du fait que les pages Web correspondantes ont été modifiées ou retirées du site où elles étaient publiées, et pour prendre en compte de nouvelles publications de pages Web.

La présente invention a pour but de supprimer ces inconvénients. Cet objectif est atteint par la prévision d'un procédé d'indexation de pages diffusées par l'intermédiaire d'un réseau de transmission de données numériques, pour constituer une base de données d'indexation utilisable par un moteur de recherche, les pages étant diffusées à des utilisateurs équipés chacun d'un terminal connecté au réseau.

Selon l'invention, ce procédé comprend des étapes consistant à :
- recevoir et mémoriser des requêtes d'accès à une page, émises par les utilisateurs à destination d'un serveur connecté au réseau,
- retransmettre les requêtes d'accès au réseau,
- recevoir les pages transmises par le réseau en réponse aux requêtes,
- transmettre chaque page reçue à un moteur d'indexation qui l'analyse en vue de la répertorier dans la base de données d'indexation, et
- déterminer parmi les requêtes mémorisées la requête correspondant à chaque page reçue, et transmettre chaque page reçue au terminal ayant émis la requête correspondante.

Avantageusement, toutes les pages transmises en réponse aux requêtes sont mémorisées pour être traitées en différé par le moteur d'indexation.

De préférence, le moteur d'indexation met à jour dans la base de données un indice de popularité à chaque fois qu'une page déjà répertoriée dans la base de données est demandée par un utilisateur.

Selon une particularité de l'invention, ce procédé comprend en outre l'application de règles portant sur le contenu de chaque page reçue pour déterminer si oui ou non la page est transmise au moteur d'indexation pour être analysée.

L'invention concerne également un système d'indexation de pages diffusées à des utilisateurs par l'intermédiaire d'un réseau de transmission de données numériques, pour constituer une base de données d'indexation utilisable par un moteur de recherche, chacun des utilisateurs étant équipé d'un terminal connecté au réseau, ce système comprenant un moteur d'indexation de pages diffusées par le réseau.

Selon l'invention, ce système comprend :
- des moyens pour recevoir et mémoriser des requêtes d'accès à des pages, émises par les utilisateurs, et pour retransmettre ces requêtes au réseau,
- des moyens pour recevoir les pages transmises par le réseau en réponse aux requêtes, et pour transmettre les pages reçues au moteur d'indexation, et
- des moyens pour déterminer parmi les requêtes mémorisées la requête correspondant à chaque page reçue, et pour transmettre chaque page reçue au terminal ayant émis la requête correspondante.

Selon une particularité de l'invention, les communications entre le moteur d'indexation et les moyens de réception de pages sont effectuées conformément au protocole ICAP.

Selon une autre particularité de l'invention, les moyens de réception des requêtes et les moyens de réception des pages transmises en réponse, sont conçus sous la forme d'un serveur cache ou proxy-cache interposé entre les terminaux d'utilisateurs et le réseau, et connecté au moteur d'indexation, comprenant des moyens de stockage temporaire de toutes les pages reçues.

Selon encore une autre particularité de l'invention, le moteur d'indexation comprend des moyens pour déterminer si une page qui lui est transmise est déjà ou non répertoriée dans la base de données d'indexation, et pour mettre à jour un indice de popularité associé à chaque page répertoriée dans la base de données, à chaque fois qu'une page déjà répertoriée dans la base de données est transmise au moteur d'indexation.

Avantageusement, le réseau comprend le réseau Internet.

Un mode de réalisation préféré de l'invention sera décrit ci-après, à titre d'exemple non limitatif, avec référence aux dessins annexés dans lesquels :
La figure 1 représente schématiquement un système reliant des terminaux d'utilisateurs à des sites Internet, incluant un système d'indexation selon l'invention ;
La figure 2 montre plus en détail le système d'indexation représenté sur la figure 1.

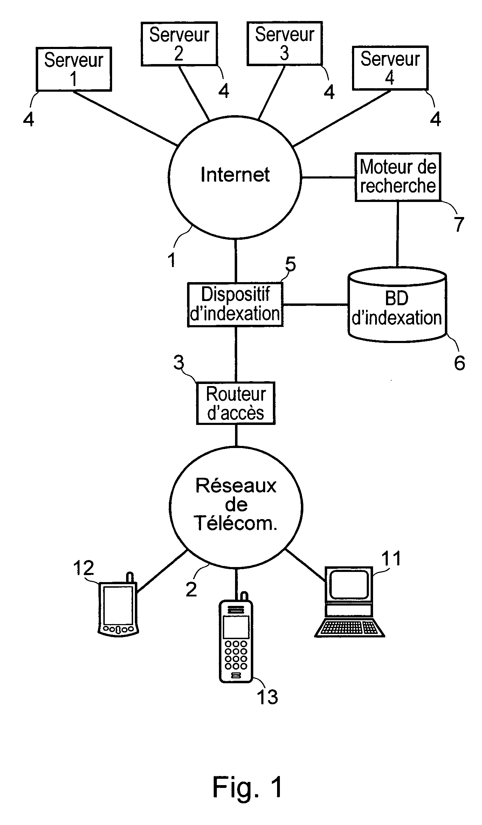

La figure 1 montre un réseau public 1 de transmission de données numériques, tel que le réseau Internet, donnant accès à une multiplicité de serveurs 4 publiant chacun un ou plusieurs ensembles de pages Web. Pour accéder au réseau 1, les utilisateurs disposent chacun d'un terminal 11, 12, 13 connecté au réseau 1 par exemple par l'intermédiaire d'un réseau de télécommunication 2 qui est couplé au réseau 1 par un routeur d'accès 3.

Les terminaux d'utilisateurs peuvent être de type ordinateur personnel 11, assistant électronique personnel 12 (PDA) ou encore téléphone mobile 13.

Pour pouvoir effectuer des recherches parmi les pages Web publiées par l'intermédiaire du réseau 1, ce système comprend également au moins un moteur de recherche 7 conçu pour donner une liste d'adresses de pages Web répondant à un critère de recherche défini notamment par un mot clé ou une combinaison de mots clés. Pour pouvoir effectuer de telles recherches, le moteur de recherche dispose d'un accès à une base de données d'indexation 6.

Selon l'invention, ce système comprend un dispositif d'indexation 5 qui est conçu pour être interposé sur les liaisons reliant les terminaux des utilisateurs au réseau 1, et pour extraire une copie de toutes les pages Web transmises par les serveurs 4 aux terminaux d'utilisateurs, afin de les analyser en vue d'alimenter la base de données d'indexation 6. Ce dispositif d'indexation 5 peut être interposé de manière explicite ou à l'insu des utilisateurs et des serveurs 4.

De cette manière, l'indexation selon l'invention ne génère pas de flux supplémentaire sur le réseau. Elle ne consomme donc pas de bande passante. Elle ne nécessite pas non plus de référencement préalable des sites Internet. Comme les flux transmis par les serveurs aux utilisateurs sont analysés en permanence, elle permet en outre de déterminer la popularité (nombre de fois que chaque page est demandée par un utilisateur) de chaque site ou chaque page Web, visité par les utilisateurs. Les réponses fournies par le moteur de recherche peuvent donc être ordonnées en fonction de la popularité de chaque site.

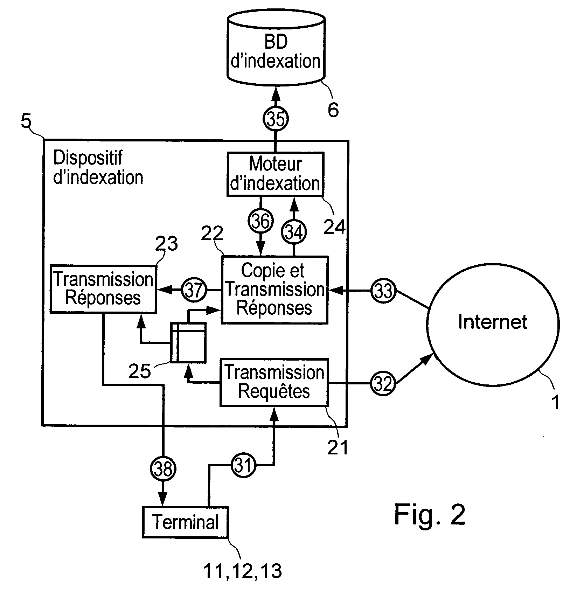

Sur la figure 2, le dispositif d'indexation 5 comprend :
- des moyens 21 pour recevoir toutes les requêtes émises par les terminaux d'utilisateurs connectés au routeur d'accès 3, et pour retransmettre d'une manière transparente ces requêtes vers le réseau Internet 1 ;
- des moyens 22 pour recevoir du réseau Internet 1 les pages Web émises en réponse aux requêtes retransmises par les moyens 21 ;
- un moteur d'indexation 24 à qui sont retransmises les pages Web reçues, ce moteur étant conçu pour analyser ces pages Web et alimenter la base de données d'indexation 6 en fonction de ces pages Web, et retransmettre celles-ci au moyens 22 de réception ; et
- des moyens 23 pour retransmettre les pages Web transmises par le moteur d'indexation 24 aux moyens de réception 22 aux terminaux 11, 12, 13 d'utilisateurs d'où proviennent les requêtes correspondantes.

Le dispositif d'indexation est par exemple conçu comme un serveur cache ou proxy-cache. A cet effet, il est doté d'une mémoire de masse importante pour stocker et mettre à jour régulièrement les pages Web les plus consultées par les utilisateurs avec lesquels il est connecté par l'intermédiaire du routeur d'accès 3. De cette manière, lorsqu'un utilisateur demande une page Web qui est mémorisée dans la mémoire de masse, le serveur cache fournit à l'utilisateur directement la page Web mémorisée sans accéder au serveur 4 qui publie cette page.

Plus précisément, le dispositif d'indexation 5 est conçu comme un serveur cache ou proxy-cache, doté d'une mémoire de masse pouvant stocker les pages Web les plus consultées par les utilisateurs connectés au routeur d'accès 3, et comprenant des moyens de mise à jour des pages Web mémorisées dans cette mémoire de masse. De cette manière, lorsqu'un utilisateur demande une page Web publiée par un serveur Internet 4 et déjà stockée dans cette mémoire de masse, la page Web mémorisée dans la mémoire de masse est délivrée en réponse à l'utilisateur à la place de celle qui est publiée par le serveur Internet, ce qui permet de raccourcir les temps d'accès à ces pages et de réduire le trafic sur le réseau 1.

Le fonctionnement du dispositif d'indexation est par exemple le suivant.
Lors d'une première étape 31, les moyens 21 de réception de requêtes reçoivent une requête émise par un terminal d'utilisateur 11. Une telle requête comprend classiquement un identifiant d'utilisateur, par exemple l'adresse IP (Internet Protocol) de son terminal, et une adresse URL (Uniform Resource Locator) de la page Web demandée. Lors d'une seconde étape 32, cette requête est mémorisée dans une table 25 et l'adresse URL demandée est transmise au réseau Internet 1. Les moyens de réception 22 reçoivent à la troisième étape 33 la page Web transmise en réponse par le réseau Internet. A la quatrième étape 34, les moyens de réception 22 recherchent dans la table 25 l'adresse URL correspondant à la page Web reçue et transmettent la page Web reçue et l'adresse URL correspondante au moteur d'indexation 24. Avantageusement, seules les données contenues dans la page Web, susceptibles d'être traitées par le moteur d'indexation sont transmises à ce dernier, par exemple uniquement les pages textuelles. A cet effet, les moyens de réception 22 comprennent un moteur de règles permettant de définir des règles de transfert des pages Web vers le moteur d'indexation 24.

A la cinquième étape 35, la page Web est analysée par le moteur d'indexation pour déterminer tout d'abord si la page Web n'est pas déjà indexée dans la base de données 6, si elle est déjà dans sa forme actuelle indexée dans cette base, ou si elle a été mise à jour depuis la dernière fois où elle a été indexée. Si la page Web n'est pas répertoriée dans la base de données 6, le moteur d'indexation effectue une catégorisation de la page Web et complète la base de données 6 avec les informations ainsi obtenues d'indexation et de catégorisation de la page Web. Si la page est déjà répertoriée dans la base de données 6, le moteur d'indexation met à jour un indice de popularité associée à la page dans la base de données.

A la sixième étape 36, le moteur d'indexation 24 retransmet aux moyens de réception 22 la page Web qu'il vient de traiter. Par ailleurs, si le flux de réponses provenant du réseau 1 et reçues par les moyens de réception 22 est trop important, les pages Web reçues peuvent être stockées dans une mémoire tampon en attente de traitement par le moteur d'indexation 24, et retransmises immédiatement aux moyens de réception 22, pour respecter des temps de réponse acceptables par l'utilisateur.

A la septième étape 37, la page Web est transmise par les moyens de réception 22 aux moyens de retransmission 23 vers l'utilisateur. A la réception de cette page, les moyens de retransmission 23 déterminent en accédant à la table 25 l'adresse IP du terminal de l'utilisateur à qui est destinée la page Web. A la huitième étape, les moyens de retransmission 23 retransmettent la page Web à l'utilisateur à qui elle est destinée.

Avantageusement, les communications, notamment entre les moyens de réception 22 et le moteur d'indexation 24 mettent en oeuvre le protocole ICAP (Internet Content Adaptation Protocol), ce protocole étant conçu pour transmettre des informations transitant par un élément du réseau Internet, par exemple un serveur cache, vers un serveur externe de traitement.

Un service ICAP est activé pour chaque réception d'une réponse provenant d'un serveur Internet 4. Ce service comprend un moteur de règles pour définir les conditions de transfert des pages Web reçues vers le moteur d'indexation 24, par exemple uniquement les fichiers textuels. Le protocole ICAP est utilisé d'une part pour véhiculer les pages Web reçues vers le moteur d'indexation, et d'autre part pour indiquer aux moyens de réception 22 qu'ils doivent délivrer la page Web reçue au terminal de l'utilisateur.

## Revendications

1. Procédé d'indexation de pages diffusées par l'intermédiaire d'un réseau (1) de transmission de données numériques, pour constituer une base de données d'indexation (6) utilisable par un moteur de recherche (7), les pages étant diffusées à des utilisateurs équipés chacun d'un terminal (11, 12, 13) connecté au réseau,
**caractérisé en ce qu'**il comprend des étapes consistant à :
- recevoir (31) et mémoriser des requêtes d'accès à une page, émises par les utilisateurs à destination d'un serveur (4) connecté au réseau (1),
- retransmettre (32) les requêtes d'accès au réseau,
- recevoir (33) les pages transmises par le réseau en réponse aux requêtes,
- transmettre (34) chaque page reçue à un moteur d'indexation (24) qui l'analyse en vue de la répertorier dans la base de données d'indexation (6), et
- déterminer parmi les requêtes mémorisées la requête correspondant à chaque page reçue, et transmettre (38) chaque page reçue au terminal (11, 12, 13) ayant émis la requête correspondante.

2. Procédé selon la revendication 1,
**caractérisé en ce que** toutes les pages transmises en réponse aux requêtes sont mémorisées pour être traitées en différé par le moteur d'indexation (24).

3. Procédé selon la revendication 1 ou 2,
**caractérisé en ce que** le moteur d'indexation (24) met à jour dans la base de données (6) un indice de popularité à chaque fois qu'une page déjà répertoriée dans la base de données est demandée par un utilisateur.

4. Procédé selon l'une des revendications 1 à 3,
**caractérisé en ce qu'**il comprend en outre l'application de règles portant sur le contenu de chaque page reçue pour déterminer si oui ou non la page est transmise au moteur d'indexation (24) pour être analysée.

5. Système d'indexation de pages diffusées à des utilisateurs par l'intermédiaire d'un réseau (1) de transmission de données numériques, pour constituer une base de données d'indexation (6) utilisable par un moteur de recherche (7), chacun des utilisateurs étant équipé d'un terminal (11, 12, 13) connecté au réseau, ce système comprenant un moteur d'indexation (24) de pages diffusées par le réseau,
**caractérisé en ce qu'**il comprend :
- des moyens (21) pour recevoir et mémoriser des requêtes d'accès à des pages, émises par les utilisateurs, et pour retransmettre ces requêtes au réseau,
- des moyens (22) pour recevoir les pages transmises par le réseau en réponse aux requêtes, et pour transmettre les pages reçues au moteur d'indexation (24), et
- des moyens (23) pour déterminer parmi les requêtes mémorisées la requête correspondant à chaque page reçue, et pour transmettre chaque page reçue au terminal (11, 12, 13) ayant émis la requête correspondante.

6. Système selon la revendication 5,
**caractérisé en ce que** les communications entre le moteur d'indexation (24) et les moyens (22) de réception de pages sont effectuées conformément au protocole ICAP.

7. Système selon la revendication 5 ou 6,
**caractérisé en ce que** les moyens (21) de réception des requêtes et les moyens (22) de réception des pages transmises en réponse, sont conçus sous la forme d'un serveur cache interposé entre les terminaux (11, 12, 13) d'utilisateurs et le réseau (1), et connecté au moteur d'indexation (24), comprenant des moyens de stockage temporaire de toutes les pages reçues.

8. Système selon l'une des revendications 5 à 7,
**caractérisé en ce que** le moteur d'indexation (24) comprend des moyens pour déterminer si une page qui lui est transmise est déjà ou non répertoriée dans la base de données d'indexation (6), et pour mettre à jour un indice de popularité associé à chaque page répertoriée dans la base de données, à chaque fois qu'une page déjà répertoriée dans la base de données est transmise au moteur d'indexation.

9. Système selon l'une des revendications 5 à 8,
**caractérisé en ce que** le réseau (1) comprend le réseau Internet.
